# EUROPÄISCHE PATENTANMELDUNG

(11) **EP 1 300 078 A1**
(43) Veröffentlichungstag der Anmeldung: **09.04.2003**
(21) Anmeldenummer: 02022568.6
(22) Anmeldetag: 08.10.2002
(51) Int. Cl.: A01N 65/00, A01G 13/00

(54) **Zubereitung und Verwendung dieser Zubereitung zur Bekämpfung und/oder Vorbeugung gegen den Erreger des Feuerbrandes Erwinia amylovora**

(30) Priorität: 08.10.2001 DE 10149557
(71) Anmelder: Jobeck GmbH, 83734 Hausham (DE)
(72) Erfinder: Becker, Josef, 83734 Hausham (DE)
(74) Vertreter: Schirdewahn, Jürgen

(57) **Zusammenfassung**

Die Erfindung betrifft eine Zubereitung und die Verwendung dieser Zubereitung zur Bekämpfung und/oder Vorbeugung gegen den Erreger des Feuerbrandes Erwinia amylovora, wobei die Zubereitung wenigstens eine natürliche Kräuterkomponente, ausgewählt aus Teebaumöl, Wintergrünöl und Eugenol oder eine Mischung daraus enthält, wobei zusätzliche noch die Pflanze stärkende Mittel, wie Neemöl, Urticae (Brennessel) und Hedere Helices (Efeu), neben Trägerstoffen und Lösungsmitteln in der Zubereitung vorhanden sein können und wobei zur Stärkung der Pflanzen verwendbare Kräutersude und ein Verfahren zur Behandlung von an Feuerbrand erkrankten Pflanzen beschrieben werden.

## Beschreibung

Die Erfindung betrifft eine Zubereitung und deren Verwendung zur Bekämpfung und/oder zur Vorbeugung gegen den Erreger des Feuerbrandes Erwinia amylovora.

Die vor allem Kernobst und Zierpflanzen bedrohende Krankheit Feuerbrand wird durch das stäbchenförmige Bakterium Erwinia amylovora ausgelöst. Sie gilt derzeit als wichtigste Bakterienkrankheit für Kernobstplantagen und befällt neben dem Kernobst, wie Apfel, Birne, Quitte, auch Zierpflanzen, wie Steinmispel, Feuerdorn und Scheinquitte, sowie Wildpflanzen, wie Weißdorn, Mehlbeerbaum, Vogelbeerbaum und Eberesche.

Das Bakterium Erwinia amylovora ist fähig, zwischen krankem und gesundem Rindengewebe von Pflanzen zu überwintern und tritt im Frühjahr als Bakterienschleim (Exsudat) aus der Rinde aus. Das Exsudat wird durch Insekten, wie Bienen, Wespen, Fliegen, aber auch durch Wind oder Regen, auf Triebe, Knospen, Blätter und Blüten übertragen, wobei insbesondere schwere Feuerbrandinfektionen auch durch Hagelschäden ausgelöst werden können.

Durch den Befall des Bakteriums können gesamte Obstanlagen innerhalb eines Jahres absterben und die Krankheit zeichnet sich dadurch aus, dass befallene Blüten und Blätter welken und sich dunkelbraun bis schwarz verfärben, absterben und eintrocknen.

Bisher wurde ein Streptomycin enthaltendes Antibiotikum zur Bekämpfung des Feuerbrandes eingesetzt, welches jedoch auch zur Behandlung von bakteriologischen Erkrankungen in der Humanmedizin Verwendung findet, so dass bei Verabreichung des entsprechenden Antibiotikums mit Antibiotika-Resistenzen dieser Bakterien mit den entsprechenden Folgen zu rechnen ist. Die Zulassung dieses Antibiotikums erfolgte im Obstanbau nur aufgrund der existentiellen Bedrohung für die einzelnen Betriebe per Ausnahmeerlass.

Der Erfindung liegt daher die Aufgabe zugrunde, den Erreger des Feuerbrandes Erwinia amylovora zu bekämpfen und/oder dessen Auftreten zu verhindern, ohne dass aus humanmedizinischen Aspekten bedenkliche Antibiotika zum Einsatz kommen.

Diese Aufgabe wird durch die in den Ansprüchen 1 bis 6 gekennzeichnete Verwendung natürlicher Komponenten, einzeln oder in deren Kombination, gelöst. Spezielle Zubereitungen zum Schutz vor Befall mit dem Feuerbranderreger Erwinia amylovora oder zu dessen Bekämpfung sind in den Patentansprüchen 7 bis 10 beschrieben, wobei gemäß den Ansprüchen 11 bis 14 die Zubereitungen in Form eines Kräutersuds angewandt werden können, wobei Anspruch 15 das erfindungsgemäße Anweungsverfdahren beschreibt.

Die Erfindung bezieht sich daher auf die Verwendung von auf einem Träger aufgebrachten und/oder in einem Lösungsmittel zumindest teilweise löslichen Teebaumöl zur Bekämpfung und/oder Vorbeugung gegen ein Feuerbrand-erregendes Bakterium.

Die Erfindung bezieht sich weiterhin auf die Verwendung von auf einem Träger aufgebrachten und/oder in einem Lösungsmittel zumindest teilweise löslichen Wintergrünöl zur Bekämpfung und/oder Vorbeugung gegen ein Feuerbrand-erregendes Bakterium.

Die Erfindung bezieht sich weiterhin auf die Verwendung von auf einem Träger aufgebrachten und/oder in einem Lösungsmittel zumindest teilweise löslichen Eugenol zur Bekämpfung und/oder Vorbeugung gegen ein Feuerbrand-erregendes Bakterium.

Als Träger und/oder Lösungsmittel werden Paraffinöl, Isopropanol oder Ethylacetat eingesetzt. Insbesondere nimmt das Paraffinöl besonders gut die gegen das Feuerbrand-erregende Bakterium wirksamen Bestandteile auf und gibt diese dann kontinuierlich an die befallene Pflanze und/oder den Baum ab.

Die Erfindung bezieht sich weiterhin auf die Verwendung einer Mischung zur Bekämpfung des Erregers von Feuerbrand, wobei die Mischung wenigstens eine Komponente, ausgewählt aus Teebaumöl, Wintergrünöl und Eugenol, enthält.

Das Feuerbrand-erregende Bakterium ist hierbei Erwinia amylovora.

Die Erfindung bezieht sich weiterhin auf eine Zubereitung für die Verwendung gegen den Erreger des Feuerbrandes Erwinia amylovora, umfassend wenigstens eine der Komponenten, ausgewählt aus Teebaumöl, Wintergrünöl und Eugenol, in einem Mengenbereich für:
Teebaumöl 5 bis 20 Gew.-%,
Wintergrünöl 3 bis 12 Gew.-% und
Eugenol 1 bis 6 Gew.-%,
wobei die Restmenge auf 100 Gew.-% aus Trägerstoffen bzw. Lösungsmitteln für die gegen den Erreger des Feuerbrandes wirksamen Komponenten und aus die Pflanzen-stärkenden Zusatzkomponenten besteht.

Bei vorteilhaften Ausgestaltungen der Erfindung werden als pflanzenstärkende Mittel insbesondere Filicis (Farn), Urticae (Brennessel) und Hedere Helicis (Efeu) verwendet.

Eine erfindungsgemäß wirksame Zubereitung zur Bekämpfung und/oder zur Vorbeugung gegen den Erreger des Feuerbrandes Erwinia amylovora, umfaßt:
Isopropanol 16 bis 64 Gew.-%,
Ethylacetat 10 bis 40 Gew.-%,
Paraffinöl 7 bis 16 Gew.-%,
Teebaumöl 5 bis 20 Gew.-%,
Wintergrünöl 2 bis 12 Gew.-%,
Filicis (Farn) 2 bis 10 Gew.-%,
Neemöl 2 bis 7 Gew.-%,
Urticae (Brennessel) 1 bis 6 Gew.-%,
Eugenol 2 bis 6 Gew.-%,
Hedere Helicis (Efeu) 1 bis 5 Gew.-%.

Eine erfindungsgemäß wirksame Zubereitung zur Bekämpfung und/oder zur Vorbeugung gegen den Erreger des Feuerbrandes Erwinia amylovora umfaßt:
Isopropanol 32 Gew.-%,
Ethylacetat 20 Gew.-%,
Paraffinöl 15 Gew.-%,
Teebaumöl 10 Gew.-%,
Wintergrünöl 6 Gew.-%,
Filicis (Farn) 5 Gew.-%,
Neemöl 3,5 Gew.-%,
Urticae (Brennessel) 3,0 Gew.-%,
Eugenol 3,0 Gew.-%,
Hedere Helicis (Efeu) 2,5 Gew.-%.

Ein erfindungsgemäß wirksamer Kräutersud zur Bekämpfung und/oder zur Vorbeugung gegen den Erreger des Feuerbrandes Erwinia amylovora umfasst:
Teebaumöl 1 bis 10 Gew.-%,
Neemöl 1 bis 10 Gew.-%,
Hedere Helicis (Efeu) 1 bis 10 Gew.-%,
Filicis (Farn) 1 bis 10 Gew.-%,
Urticae (Brennessel) 0,5 bis 5 Gew.-%,
mit der Restmenge auf 100 Gew.-% Wasser.

Ein weiterer erfindungsgemäß wirksamer Kräutersud zur Bekämpfung und/oder zur Vorbeugung gegen den Erreger des Feuerbrandes Erwinia amylovora umfasst:
Wasser 87 Gew.-%,
Teebaumöl 3 Gew.-%,
Neemöl 3 Gew.-%,
Hedere Helices (Efeu) 3 Gew.-%,
Filicis (Farn) 3 Gew.-%) und
Urticae (Brennessel) 1 Gew.-%

Ein die Pflanze kräftigender Kräutersud zur Behandlung von an Feuerbrand erkrankten Pflanzen und/oder zur Vorbeugung der Krankheit lässt sich herstellen, indem beispielsweise 1 l des obigen Kräutersuds auf 100 l Gießwasser verdünnt werden. Mit diesem Kräutersud wird der Boden im Bereich der Pflanzen gegossen, wobei zweckmäßigerweise pro Baum 1 bis 2 l Kräutersud um den Stamm verteilt werden. Während der Blütezeit und 4 Wochen später sollte die Anwendung des Kräutersuds wiederholt werden. Auf diese Weise werden geschwächte Bäume und Sträucher auf natürliche Weise gekräftigt.

Als Verdünnungsmittel für den Kräutersud findet Wasser Verwendung.

Die Anwendung der oben genannten Zubereitungen und des gesamten Kräutersuds gegen den Erreger des Feuerbrandes Erwinia amylovora kann sowohl zur Vorbeugung der Erkrankung als auch bei akuter Erkrankung erfolgen.

Bei der Bekämpfung gegen den Feuerbranderreger werden nach einem erfindungsgemäßen Verfahren in einem ersten Schritt befallene Teile der Pflanze oder des Baums abgebrochen bzw. abgesägt und anschließend wird in einem zweiten Schritt die Restpflanze und/oder der Wurzelbereich mit den erfindungsgemäßen Zubereitungen oder dem erfindungsgemäßen Kräutersud eingesprüht.

Die erfindungsgemäßen Zubereitungen bzw. der Kräutersud lassen sich gezielt auf einzelne vom Erreger des Feuerbrandes befallene Pflanzen und/oder Bäume anwenden, so dass es nicht mehr nötig ist, den gesamten Pflanzen- oder Baumbestand zu besprühen, wie dies bisher übliche Praxis war. Hierdurch lassen sich auch erhebliche Kosteneinsparungen verwirklichen.

Im folgenden wird die Wirksamkeit der in der Erfindung verwandten Zubereitung anhand eines Beispiels näher erläutert.

### Beispiel

Als Organismus wurde der unter der Stammbezeichnung DSM50901 bezogene Mikroorganismus eingesetzt (Deutsche Sammlung für Mikroorganismen und Zellkulturen DSMZ). Das Bakterium wurde auf spezifischen Nährmedien angezogen, insbesondere auf tryptic soya broth agar.

Zur Prüfung der Wirksamkeit der in den Patentansprüchen genannten Komponenten bzw. Mischungen und Zubereitungen wurden TSA-Nährböden dicht mit Bakterienzellen von Erwinia amylovora DSM50901 beimpft. Anschließend wurden jeweils 10 µl der Zubereitungen auf die beimpften Nährböden pipettiert. Nach Austrocknung des Mittels wurden die Ansätze für 1 Tag bei 28°C im Brutschrankt inkubiert. Die Auswertung erfolgte nach Ablauf dieser Zeit visuell.

### Ergebnis und Bewertung

Im Bereich der beimpften Nährmedien zeigte sich eine deutlich abgegrenzte Hemmzone, in welcher kein Bakteriumwachstum zu erkennen war.

Für die Herstellung der erfindungsgemäßen Zubereitungen und des erfindungsgemäßen Kräutersuds wurden handelsübliche Kräuteröle eingesetzt.

Das Teebaumöl wurde von der Firma Reincke & Fichtner GmbH bezogen, mit folgenden physikalisch-chemischen Daten:

| | |
|---|---|
| Erscheinung | Eine leicht gelblich bis grünliche Flüssigkeit mit einem charakteristischen Geruch |
| Dichte (20°C) | 0,883 - 0,905 |
| Optische Drehung | +5 - +15° |
| Brechungsindex (20°C) | 1,475 - 1,482 |
| Gehalt (G.C.) | n.a. |
| Flammpunkt | > 55°C |
| Schmelzpunkt | n.a. |
| Siedepunkt | n.a. |
| Löslichkeit | 1:2 klar löslich in Alkohol |
| Lagerung | Dicht verschlossen, kühl und trokken an einem gut belüfteten Ort lagern. Vor Luft- und Lichteinwirkung schützen. |

Das Wintergrünöl besteht zu 98% aus Methylsalicylat.

Als Farnöl wurde ein Produkt der Firma Gehrlicher GmbH & Co.KG, Eurasburg, eingesetzt, welches folgende physikalischchemische Daten besaß:

| | |
|---|---|
| Bezeichnung des Produktes | Extract. Filicis mar. e herba fluidum |
| Chargen-Bez. | 4381 |
| Stammpflanze | Dryopteris filix-mas (L.) |
| Verwendte Drogenteile | Herba |
| Extraktionsmittel | Ethanol 90% V/V |
| Drogen/Extrakt-Relation | 1 : 2 |
| Aussehen | Ethanolische, klare Flüssigkeit Farbe: grünlich-braun Geruch: aromatisch Geschmack: adstringierend |
| Relative Dichte Ph.Eur. 1997 | 0,8340 |
| pH-Wert | 5,2 |
| Trockenrückstand Ph.Eur. 1997 | 3,2% m/m |
| Ethanolgehalt (GC) | 88,9% V/V |

Als Brennesselöl wurde ein Produkt der Firma Gehrlicher GmbH & Co.KG, Eurasburg, verwendet, welches folgende physikalisch-chemischen Daten besaß:

| | |
|---|---|
| Bezeichnung des Produktes | Extract. Urticae e herba fluidum |
| Chargen-Bez. | 4523 |
| Stammpflanze | Urtica dioica L. |
| Verwendte Drogenteile | Herba |
| Extraktionsmittel | Ethanol 35% V/V |
| Drogen/Extrakt-Relation | 1 : 2 |
| Aussehen | Ethanolische, klare Flüssigkeit Farbe: braun Geruch: etwas süßlich Geschmack: bitter |
| Relative Dichte Ph.Eur. 1997 | 0,9849 |
| pH-Wert | 7,3 |
| Trockenrückstand Ph.Eur. 1997 | 6,0% m/m |
| Ethanolgehalt (GC) | 35,4% V/V |

Es wurde weiterhin handelsübliche Eugenol der Firma Caesar & Loretz GmbH, Hilden, eingesetzt.

Hierbei handelt es sich um ein farbloses bis gelbes ätherisches Öl mit folgenden physikalisch-chemischen Daten:

| | |
|---|---|
| Schmelzpunkt/Schmelzbereich | -9°C |
| Siedepunkt/Siedebereich | 253/160-250°C |
| Flammpunkt | > 60°C |
| Zersetzungstemperatur | >300/>250/>250°C |
| Dampfdruck bei 20°C | < 1/< 5 hPa |
| Dichte bei 20°C | etwa 1 g/cm³ |
| Löslichkeit in/Mischbarkeit mit Wasser | nicht bzw. wenig mischbar |

Als Efeukomponente wurde ein Produkt der Firma Gehrlicher GmbH & Co., Eurasburg, mit folgenden physikalisch-chemischen Daten verwendet:

| | |
|---|---|
| Bezeichnung des Produktes | Extract. Hederae helicis e fol. fluidum |
| Chargen-Bez. | 4805 |
| Stammpflanze | Hedera helix L. |
| Verwendte Drogenteile | Folia |
| Extraktionsmittel | Ethanol 96% V/V |
| Drogen/Extrakt-Relation | 1 : 2 |
| Aussehen | Ethanolische, klare Flüssigkeit Farbe: dunkelgrün Geruch: aromatisch Geschmack: bitter |
| Relative Dichte Ph.Eur. 1997 | 0,8650 |
| pH-Wert | 6,1 |
| Trockenrückstand Ph.Eur. 1997 | 9,2% m/m |
| Ethanolgehalt (GC) | 86,4% V/V |

Für die Herstellung wirksamer Zubereitungen, Mischungen und Kräutersude sind alle erforderlichen und im Handel erhältlichen Komponenten einsetzbar, so dass die oben angegebenen Produkte die Erfindung nicht beschränken.

## Patentansprüche

1. Verwendung von auf einem Träger aufgebrachten und/oder in einem Lösungsmittel zumindest teilweise löslichen Teebaumöl zur Bekämpfung und/oder Vorbeugung gegen ein Feuerbrand-erregendes Bakterium.

2. Verwendung von auf einem Träger aufgebrachten und/oder in einem Lösungsmittel zumindest teilweise löslichen Wintergrünöl zur Bekämpfung und/oder Vorbeugung gegen ein Feuerbrand-erregendes Bakterium.

3. Verwendung von auf einem Träger aufgebrachten und/oder in einem Lösungsmittel zumindest teilweise löslichen Eugenol zur Bekämpfung und/oder Vorbeugung gegen ein Feuerbrand-erregendes Bakterium.

4. Verwendung nach einem der Ansprüche 1 bis 3, **dadurch gekennzeichnet, dass** als Träger und/oder Lösungsmittel Paraffinöl, Isopropanol oder Ethylacetat eingesetzt wird.

5. Verwendung einer Mischung zur Bekämpfung des Erregers von Feuerbrand, **dadurch gekennzeichnet, dass** die Mischung wenigstens eine Komponente, ausgewählt aus Teebaumöl, Wintergrünöl und Eugenol, enthält.

6. Verwendung nach einem der Ansprüche 1 bis 5, **dadurch gekennzeichnet, dass** das Feuerbrand-erregende Bakterium Erwinia amylovora ist.

7. Zubereitung für die Verwendung gegen den Erreger des Feuerbrandes Erwinia amylovora, umfassend wenigstens eine der Komponenten, ausgewählt aus Teebaumöl, Wintergrünöl und Eugenol, in einem Mengenbereich für:
Teebaumöl 5 bis 20 Gew.-%,
Wintergrünöl 3 bis 12 Gew.-% und
Eugenol 1 bis 6 Gew.-%,
wobei die Restmenge auf 100 Gew.-% aus Trägerstoffen bzw. Lösungsmitteln für die gegen den Erreger des Feuerbrandes wirksamen Komponenten und aus die Pflanzen-stärkenden Zusatzkomponenten besteht.

8. Zubereitung nach Anspruch 7, **dadurch gekennzeichnet, dass** die Pflanzen-stärkenden Zusatzkomponenten ausgewählt sind aus Filicis (Farn), Urticae (Brennessel) und Hedere Helicis (Efeu).

9. Zubereitung zur Bekämpfung und/oder zur Vorbeugung gegen den Erreger des Feuerbrandes Erwinia amylovora umfassend:
Isopropanol 32 Gew.-%,
Ethylacetat 20 Gew.-%,
Paraffinöl 15 Gew.-%,
Teebaumöl 10 Gew.-%,
Wintergrünöl 6 Gew.-%,
Filicis (Farn) 5 Gew.-%,
Neemöl 3,5 Gew.-%,
Urticae (Brennessel) 3,0 Gew.-%,
Eugenol 3,0 Gew.-%,
Hedere Helicis (Efeu) 2,5 Gew.-%.

10. Zubereitung zur Bekämpfung und/oder zur Vorbeugung gegen den Erreger des Feuerbrandes Erwinia amylovora, umfassend:
Isopropanol 16 bis 64 Gew.-%,
Ethylacetat 10 bis 40 Gew.-%,
Paraffinöl 7 bis 16 Gew.-%,
Teebaumöl 5 bis 20 Gew.-%,
Wintergrünöl 2 bis 12 Gew.-%,
Filicis (Farn) 2 bis 10 Gew.-%,
Neemöl 2 bis 7 Gew.-%,
Urticae (Brennessel) 1 bis 6 Gew.-%,
Eugenol 2 bis 6 Gew.-%,
Hedere Helicis (Efeu) 1 bis 5 Gew.-%.

11. Kräutersud zur Behandlung von an Feuerbrand erkrankten Pflanzen, enthaltend die in Anspruch 9 oder 10 genannte Zubereitung, zusammen mit einem geeigneten Verdünnungsmittel.

12. Kräutersud nach Anspruch 11, **dadurch gekennzeichnet, dass** das Verdünnungsmittel gegebenenfalls ein natürliches Tensid enthaltendes Wasser ist.

13. Kräutersud zur Behandlung von an Feuerbrand erkrankten Pflanzen, umfassend:
Teebaumöl 1 bis 10 Gew.-%,
Neemöl 1 bis 10 Gew.-%,
Hedere Helicis (Efeu) 1 bis 10 Gew.-%,
Filicis (Farn) 1 bis 10 Gew.-%,
Urticae (Brennessel) 0,5 bis 5 Gew.-%,
wobei die Restmenge auf 100 Gew.-% Wasser ist.

14. Kräutersud zur Behandlung von an Feuerbrand erkrankten Pflanzen, umfassend:
Wasser 87 Gew.-%,
Teebaumöl 3 Gew.-%,
Neemöl 3 Gew.-%,
Hedere Helices (Efeu) 3 Gew.-%,
Filicis (Farn) 3 Gew.-%) und
Urticae (Brennessel) 1 Gew.-%

15. Verfahren zur Behandlung von an Feuerbrand erkrankten Pflanzen, **dadurch gekennzeichnet, dass** in einem ersten Schritt erkrankte Bestandteile, wie z.B. Äste, ausgebrochen oder abgesägt werden, und in einem zweiten Schritt die befallenen Bestandteile des Baums und/oder des Wurzelbereichs mit der erfindungsgemäßen Zubereitung bzw. dem erfindungsgemäßen Kräutersud besprüht werden.
